# EUROPEAN PATENT SPECIFICATION

(11) **EP 3 270 744 B1**
(45) Date of publication and mention of the grant of the patent: **29.04.2020**
(21) Application number: 16707940.9
(22) Date of filing: 03.02.2016
(51) Int. Cl.: A47J 31/36

(54) **DISPENSING APPARATUS OF CAPSULES FOR PRODUCTION OF BEVERAGES**
AUSGABEVORRICHTUNG FÜR KAPSELN ZUR HERSTELLUNG VON GETRÄNKEN
APPAREIL DE DISTRIBUTION DE CAPSULES POUR LA PRÉPARATION DE BOISSONS

(30) Priority: 18.03.2015 IT RE20150021
(43) Date of publication of application: 24.01.2018
(73) Proprietor: Mokadose S.r.l., 41100 Modena (IT)
(72) Inventor: MOLINARI, Giuseppe, 41124 Modena (IT)
(74) Representative: Corradini, Corrado
(86) International application number: PCT/IB2016/000083
(87) International publication number: WO 2016/147041

(56) References cited:
- EP-A1- 2 617 333
- EP-A2- 1 797 800
- WO-A1-2008/113459
- WO-A1-2017/037675

## Description

### TECHNICAL FIELD

The present invention relates to a dispensing apparatus of capsules for production of beverages.

### PRIOR ART

The use of capsules has been known for several years, which are relatively small containers filled with a predetermined dose of ground substance and then inserted in automatic vending machines, in which on command they are associated to a decoction chamber that by means of a percolation process under high-pressure hot water enables obtaining an infusion. The capsules can also be distributed to the consumer who inserts them in a machine that carries out the percolation using hot water, to obtain an infusion.

For the most part the capsules are filled with ground coffee, or another ground material or in any case materials in small pieces, for obtaining beverages: tea, camomile, or another drink. A relevant prior art document in the field of the inventivon is for example EP2617333.

### DESCRIPTION OF THE INVENTION

The present invention relates to an apparatus for manipulating capsules having a substantially cylindrical or truncoconical body. Further, the majority of these capsules exhibits a circular edge that projects radially, located on the larger base thereof, where the body is sufficiently rigid to conserve its shape under the stresses it is subjected to during decoction.

In greater detail, the present invention relates to an apparatus for ordered dispensing, according to a succession of single objects, of capsules coming from a tank containing a multitude of loosely-arranged capsules.

The dispensing action of the apparatus is such as to make available to the user one capsule at a time, manually collected with the purpose of positioning it in a machine which, by means of percolation, produces a drink with the contents of the capsule.

The practical application of the apparatus is in a sales point for beverages (in particular cafes) which are prepared time by time by a human operator; at present, the operator manually loads a decoction chamber (usually provided with a handle and grip) with loose coffee which is dispensed by a recipient-tank, and presses it down with a tamp before arranging it in the chamber of the coffee machine.

With the apparatus of the invention, in preparing coffee (or other beverages) in a commercial structure, it becomes possible for the user-operator to simply, hygienically and rapidly use pre-packed capsules filled with the substance the beverage is to be made from, with the great advantage, with respect to present methods, of utilising favourable characteristics offered by the capsules (more constant doses, precise and correctly packed with ground substance, which is further compacted more precisely with respect to the doses that the operator can load manually).

In the ambit of the described task, an aim of the invention is to realise a dispensing apparatus which is structurally simple (and consequently less expensive to manufacture) and reliable functioning.

This and other aims are attained by the present invention as it is characterised in the claims.

### BRIEF DESCRIPTION OF THE DRAWINGS

The invention is described in detail in the following with the aid of the accompanying figures of the drawings, which illustrate an embodiment thereof given by way of non-exclusive example.
Figure 1 is a vertical elevation of the dispensing apparatus of the invention, where the fixed tank is mostly shown in section.

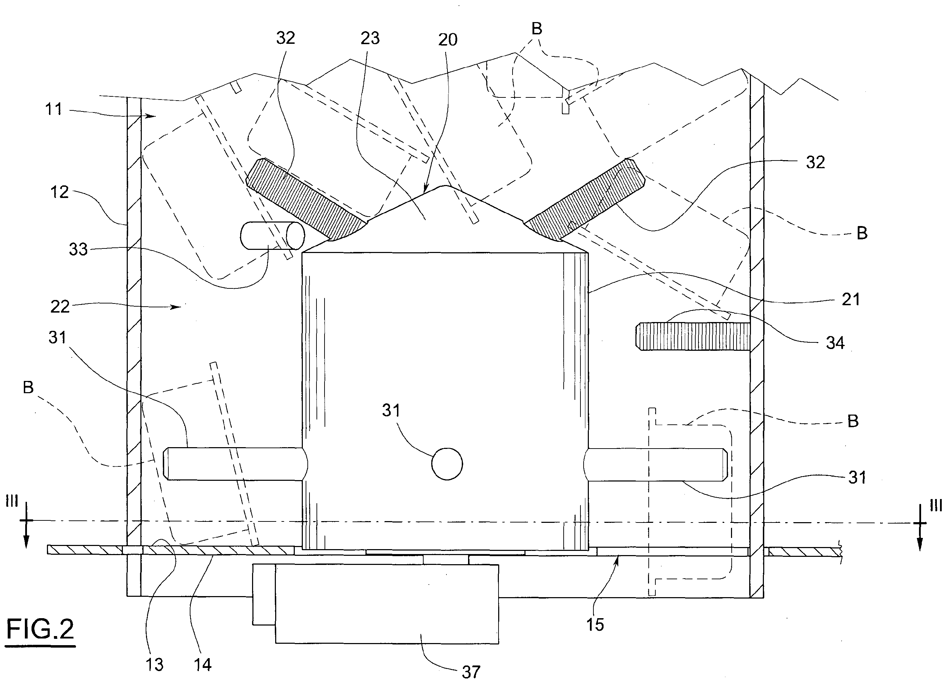

Figure 2 is a section view of the tank of figure 1 in larger scale.
Figure 3 is a plan view from above of figure 1.
Figure 3A is a section view along plane IIIA-IIIA of figure 2.
Figure 4 is a section view along plane IV-IV of figure 1.
Figure 5 is a perspective view of a cartridge operable by means of the apparatus according to the invention.

### BEST WAY OF CARRYING OUT THE INVENTION

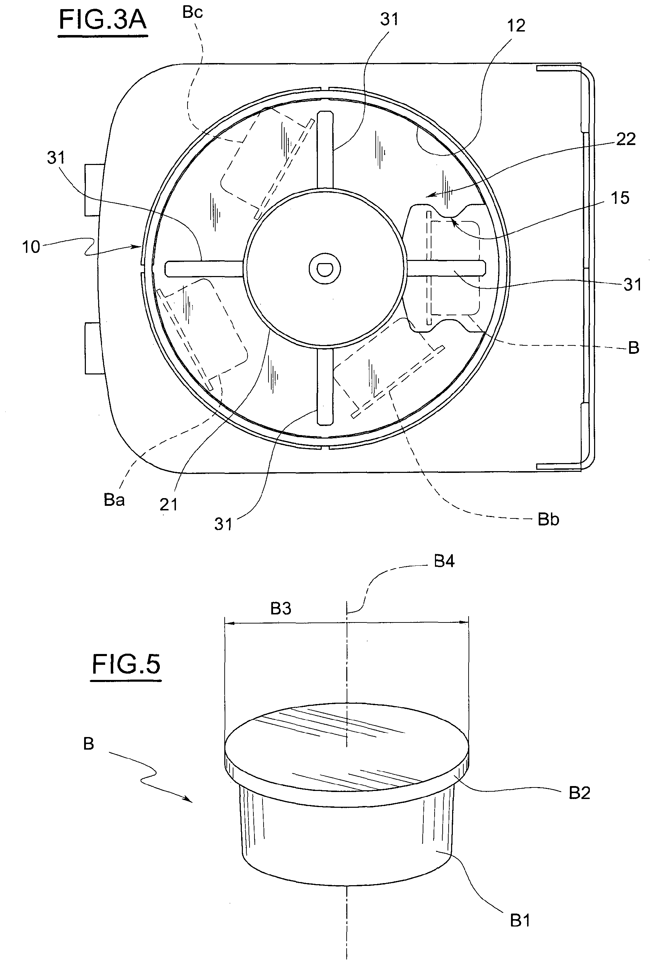

The capsules (denoted by B in the figure and drawn in broken lines for greater clarity of illustration) which are treated by the dispensing apparatus of the invention, have a body B1 that is substantially cylindrical or truncoconical. The capsules preferably also comprise a circular edge B2 that projects radially, located on the larger base of the body B1 (see in particular figure 5). The apparatus of the invention comprises a fixed store able to contain a plurality of capsules B arranged loosely, having a chamber 11, at least in a lower portion thereof, that is delimited by a lateral wall 12, having a vertical axis A. The chamber 11 is inferiorly closed by a lower wall 14, preferably flat and defining the lower horizontal base 13, closed by the chamber 11.

In the embodiment illustrated in the figure, the lateral wall 12 of the whole chamber 11 has a constant cylindrical shape and section.

The tank 10 has an upper end 10' through which the capsules are installed internally of the chamber 11.

A rotating body 20 is located in the lower part of the chamber 11, on the lower base 13, which rotating body 20 is coaxial with the chamber 11, the whole lateral wall 21 of which rotating body 20 is substantially cylindrical.

The rotating body 20 is set in rotation about the axis A, with a relatively slow velocity (a few revolutions per minute) by means of a motor 37.

An empty corridor 22 is delimited between the lateral wall 21 of the chamber 20 and the lateral wall 12 of the rotating body 20, which empty corridor 22 has a closed-ring (toroidal) extension that occupies the extreme lower portion of the chamber; the section of the corridor 22, according to the generic axial plane, is constant and has dimensions such that only one capsule at a time passes through it, arranged with the axis B4 thereof horizontal or nearly so and orientated radially or nearly so; in fact, the section has radial dimensions (width of the corridor) that are smaller than the diameter B3 of the circular edge B2 and greater than the thickness of the capsule B.

The height of the corridor 22 is defined by the height of the wall 21 of the rotating body 20 and is greater than the diameter B3; preferably the height is greater than 1.5 times the diameter B3 of the capsules.

The corridor 22 is empty and free along a whole circular development thereof and enables the capsules B to be moved freely internally thereof, one following another, along a whole circular development thereof.

Some first bars 31 are fixed on the lateral wall 21 of the rotating body 20, which are elongate and project radially from the wall, and have a shorter length than the width of the annular corridor 22; the first bars 31 move along the whole pathway of the channel 22, together with the body 20. The first bars (31) are arranged at a distance from the lower base 13 that is smaller than the diameter B3 of the circular edge, and are of a length such as, during rotation of the body 20, to push each capsule placed in the annular corridor, whatever an orientation thereof. The length of the bars 31 is preferably greater than half the width of the corridor 22.

The distance between two successive bars is greater than the maximum diameter of the circular edge B2; however it is preferably not greater than double the diameter B4.

In the embodiment illustrated in the figures, four bars 31 are included, positioned at 90° from one another.

At least a second bar 32, and preferably at least two, are located on the upper cover 23 of the rotating body, above the lateral wall 21, which second bars are suitable for jiggling and shuffling the capsules located in the upper part of the chamber overlying the annular corridor 22.

The length of the second bars 32 is preferably more or less the same as the length of the first bar 31; further, the second bars 32 are arranged with the radial axis thereof inclined upwards to form an angle of 30 - 60° with respect to the horizontal line.

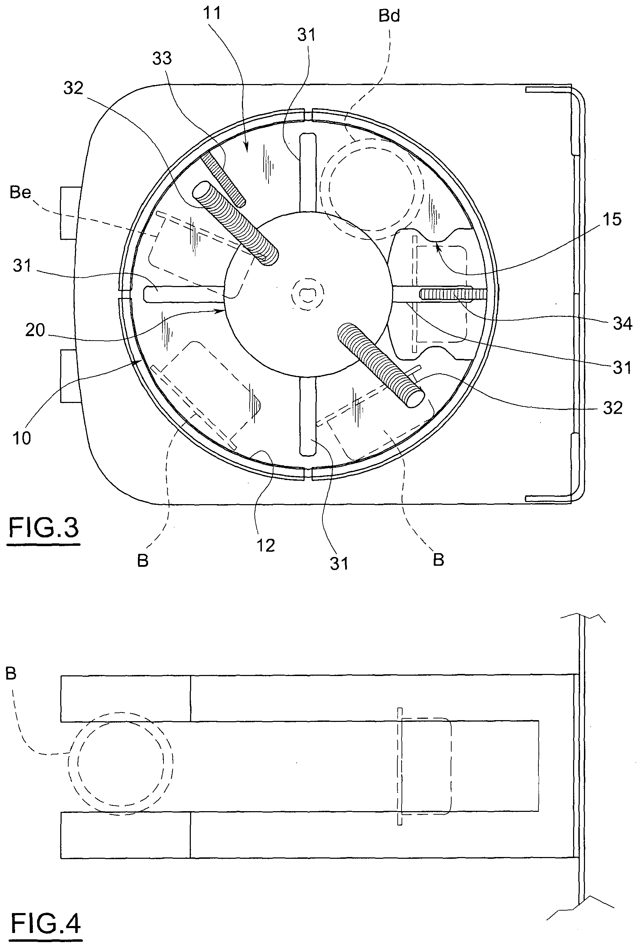

An outlet opening 15 is located in a point of the annular corridor 22, in the lower base 13 thereof, having a shape and dimensions such as to allow passage of one capsule at a time, only if the capsule is arranged with the axis thereof substantially horizontal and orientated radially or almost radially. Owing to the dimensions of the corridor 22, the capsules B located internally thereof are arranged with the axis B4 horizontal or nearly so and orientated radially or nearly so. Schematically, in plan view, the capsules B located in the corridor 22 have only two arrangements: they are either resting only against the external lateral wall 12 or only against the internal lateral wall 21 (see for example capsules Ba and Bb in figure 3A), or they are arranged resting against both surfaces (see for example capsule Bc in figure 3A).

During functioning of the apparatus, the tank 10 is filled with capsules B which are tipped through the open end of the tank 10; the capsules are naturally arranged in a disordered and random way. Normally the capsules accumulate only in the upper part of the chamber 11 and do not fall into the corridor 22, or only the ones orientated in an appropriate way to enter the channel 22 fall, as illustrated in the foregoing, i.e. those having the axis B4 thereof horizontal or nearly so and orientated radially or nearly so (such as for example capsules Ba, Bb and Bc in figure 3A).

On the other hand, the capsules arranged with the axis B4 vertical or nearly so (see for example the capsule Bd of figure 3) or horizontal and in any case inclined tangentially or nearly so with respect to the lateral wall 12 (see for example capsule Be in figure 3) cannot fall into the lower wall internally of the corridor 22. Obviously, the capsules resting on those which cannot fall into the corridor also remain blocked in the upper zone of the chamber 11.

During functioning of the apparatus, the rotating body 20 is set in relatively slow rotation (a few revolutions per minute); thanks to this movement, the second bars 32 operate a shuffling of the capsules placed above the channel 22, so that at the moment when the capsules are randomly orientated suitably for falling into the channel 22, they fall by gravity therein, also freeing the capsules that were previously resting thereon. Further, the upper cover 23 of the rotating body 20 is conformed such as to define a surface which invites and pushes the capsules to assume an orientation such as to be able to fall internally of the corridor 22; for example, this cover 23 has a substantially conical shape able to push, by sliding, the objects downwards and towards the channel 22.

At the same time, the capsules that have entered the channel 22 are pushed in the tangential direction by the first bars 31, which move in the corridor solidly with the body 20; the displacement of the capsules B happens more or less with a rolling internally of the corridor, on the lower base 13, up to the point where the outlet opening 15 is located, and then enter therein and fall by gravity, exiting the corridor.

The dimension of the opening 15 in the radial direction is substantially equal to the radial dimension of the corridor 22; so as to intercept all the capsules that are pushed by the bars 31. The dimension of the opening in the tangential direction (i.e. in the movement direction of the body 20) is instead only a little greater than the diameter B3 of the capsules, with the aim of enabling the exit of only one capsule at a time.

Further, the opening has a profile such that it not only enables passage of a single capsule at a time, but also corrects the orientation of the axis B4 thereof so that it is arranged exactly radial or nearly so. For this purpose the opening 15 has a central zone 15a (central with respect to the radial direction), having a longitudinal dimension that is smaller than the maximum diameter B3 of the cartridge, so as only to enable passage of the body B1 (but not the edge B2); instead, in the two radially extreme parts, towards the internal wall 21 and towards the external wall 12, the opening 15 has a same number of profiled zones 15b having a longitudinal dimension that is a little greater than the diameter B3 of the cartridge; the cartridge B is therefore directed to pass through the opening 15 with the circular edge B2 thereof located in one of the two zones 15b and the body B1 located in the zone 15a. The second bars 32 borne by the body 20 are preferably elastically flexible to a point of flexing only under a thrust of an intensity of a small amount lower than a thrust which would provoke a significant deformation of the capsule. In normal conditions, on the other hand, the bars 32 do not flex (or in any case not significantly) and operate the desired shuffling of the capsules; only when the bar 32 encounters a significant resistance does it flex, avoiding exerting a too-high push that might deform the capsule; when the encountered resistance ceases, the bar 12 returns to the initial position, with a reaction force such as to move a capsule that it might encounter along the travel.

Excellent results have been obtained when using cylindrical helical springs for the second bars 32, of a type designed to act only in traction.

In order to set the rotating body 20 in rotation, the dispensing apparatus preferably has a motor 37 which produces rotation (with a velocity comprised between 3 and 5 rpm) in a direction or in an opposite direction of the rotating body 20, and further comprises an automatic command device internal of the motor (not illustrated in the figures), able to invert the rotation direction when the rotating body 20 encounters a resistance (caused mostly by the action of the bars 31 along the corridor 22) of an intensity of a small amount lower than a resistance which would provoke a significant deformation of the capsule.

Owing to this characteristic, in the rotation of the body 20, when especially the first bars 31, or the second bars 32, encounter a relatively high resistance, so as to prevent deformation or damage to the capsules, the device inverts the motion of the body 20, acting so that the capsules located in the corridor 22 are driven towards the outlet opening 22 with an oppositely directed circulation. This obviates the deforming action on the capsules which has caused the inversion of motion direction and prevents the integrity of the capsules from being damaged.

To further facilitate the shuffling produced by the second bars 32 on the capsules located above the corridor 22, at least a third bar 33 having a horizontal axis projecting radially towards the vertical axis of the chamber 11 is preferably fixed to the lateral wall 12 of the chamber, a free end of which least a third bar 33 is relatively close to the surface of the upper cover 23 of the rotating body and touches on the pathway followed by the second bars 32. This bar 33, which is fixed, operates especially in combination with the movement of the second bars 32, determining the displacement of the capsules which it encounters, drawn in rotation by the bars 33.

This bar 33 is preferably elastically flexible and in any case rigid to a point of flexing only under a thrust of an intensity of a small amount lower than a thrust which would provoke a significant deformation of the capsule, as with the second bars 32.

Further, at least a fourth bar 34 is preferably fixed to the lateral wall 12 of the chamber, which at least a fourth bar 34 projects radially towards the vertical axis of the chamber, arranged vertically above the outlet opening, at a distance from the lower base that is a little greater than the diameter of the circular edge. A function of this fourth bar is to prevent the capsules located above the corridor 22 from obstructing the capsules which are drawn in movement in the corridor 22, in the zone where the opening of the outlet 15 is located.

The dispensing apparatus comprises a slide 40, located below the store 10, which has the function of accompanying, in a downwards direction, the capsules exiting from the store 10 through the outlet opening 15, and of predisposing them in a final position F, from which they are manually collected. In this final position F the capsules are orientated appropriately so as to be easily collectable directly by hand by an operator or by using a manually-activated tool D, for example a tool defining a decoction chamber, provided with a gripping handle able to snugly contain the capsule, and able to arrange it in a machine (of a usual type) for dispensing the infusion.

The slide 40 preferably comprises two rails 41, parallel and at a distance from one another, separated by an empty channel 42 having a width that is such as to receive the edge B2, with a small degree of play and less than the maximum diameter B3 of the edge B2; further, the slide 40 is inclined by about 30-60° with respect to a horizontal line and the higher end thereof is located below the outlet 15 from the tank 10; further, the rails 41 are, according to the plan view, orientated substantially parallel to the axis B4 of the capsules which fall out of the outlet 15.

During functioning the capsules B exit the tank 10 through the opening 15, with the axis B4 thereof orientated substantially horizontally; as they exit vertically from the tank, by force of gravity, the capsules B impact with the circular edge B2 thereof, the rails 41, which are substantially perpendicular (according to the plan view) to the plane defined by the edge B2 and therefore first they stop and then are inclined, oscillating along the straight line joining the two rest points of the edge B2 on the two rails 41; while the edge B2 rests coplanarly on the rails 42, the body B1 is received in the cell of the channel 42; further, the centre of gravity of the body B1, being displaced with respect to the circular edge B2, is such that the oscillation of the capsule when it encounters the rails 41 is such as to always arrange the capsules in the channel 42 with the body B1 arranged below the circular edge B2.

At the same time the capsules, which rest one by one on the rails 41, slide downwards, one behind another, up to reaching the final position F, where they halt.

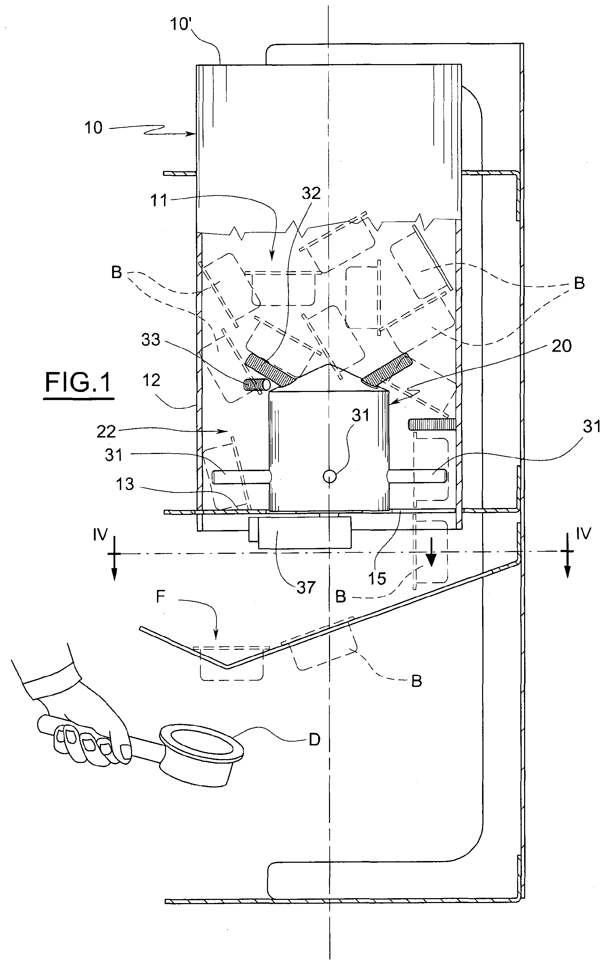

In the final position F, the capsules are orientated with the axis B4 substantially vertical and the body B1 projecting downwards; further, the end of the channel 22 is open, and therefore it is easy for an operator to collect the capsule located in the position F by hand or using a manual tool D (as illustrated in figure 1), then to use the capsules for obtaining the desired beverage.

The dispenser can advantageously be provided with means for detecting the presence of capsules on the slide 40, in particular in the final position F, and for halting the dispensing operations (i.e. halting the motor 37) when the detection is positive, and vice versa activating the motor 37 when the detection is negative, so as prevent an excessive number of capsules from accumulating on the slide.

## Claims

1. A dispensing apparatus of capsules for production of beverages, wherein each of the the capsules has a body (B1) that is substantially cylindrical or truncoconical and a circular edge (B2) radially projecting from the body (B1) and which defines a maximum diameter (B3) of the capsule,
comprising a store (10) which defines a chamber (11), able to contain a plurality of capsules arranged loosely, which chamber (11), at least in a lower portion thereof, is delimited by a lateral wall (12), which is substantially cylindrical and has a vertical axis (A), and by a closed lower horizontal base (13), comprising a rotating body (20), coaxial with the chamber (11), located on the lower base (13), having a substantially-cylindrical lateral wall (21), wherein:
an empty corridor (22) is delimited between the lateral wall (12) of the chamber (11) and the lateral wall (21) of the rotating body (20), which empty corridor (22) has a closed-ring extension, which occupies an end of the lower portion of the chamber (11), which section, according to the general axial plane, is constant and has a radial dimension that is smaller than the diameter (B3) of the circular edge (B2) of a dispensing capsule and has a height greater than the diameter (B3), **characterized in that** the dispensing apparatus further comprises some radially-projecting first bars (31) fixed on the lateral wall of the rotating body (20), at a distance from the lower base (13) that is smaller than the diameter (B3) of the circular edge (B2) of the dispensing capsule, which first bars (31) are suitable for pushing a capsule located in the annular corridor (22),
at least a second bar (32) located on the upper cover (23) of the rotating body (20), which second bar (32) is suitable for jiggling the capsules located in the part of the chamber (11) overlying the annular corridor (22),
an outlet opening (15) located in a point of the annular corridor (22), in the lower base (13) thereof, having a shape and dimensions such as to allow passage of one capsule at a time, only if the capsule is arranged with the axis (B4) of the body (B1) substantially horizontal and orientated radially or almost radially.

2. The dispensing apparatus of claim 1, wherein at least a third bar (33) is fixed to the lateral wall (12) of the chamber, which at least a third bar (33) projects radially towards the vertical axis (A) of the chamber, a free end of which least a third bar (33) is relatively close to the surface of the upper cover (23) of the rotating body (20).

3. The dispensing apparatus of capsules of claim 1, wherein at least a fourth bar (34) is fixed to the lateral wall (12) of the chamber, which at least a fourth bar (34) projects radially towards the vertical axis A of the chamber, and is arranged vertically above the outlet opening (15), at a distance from the lower base (13) that is a little greater than the diameter (B3) of the circular edge (B2).

4. The dispensing apparatus of claim 2 and 3, **characterised in that** the second bars (32) and/or the third bars (33) and/or the fourth bars (34) are elastically flexible to a point of flexing only under a thrust of an intensity of a small amount lower than a thrust which would cause a significant deformation of the capsule.

5. The dispensing apparatus of capsules of claim 1, having a motor (37) which produces rotation in a direction or in an opposite direction of the rotating body (20), **characterised in that** it comprises a command device connected to the motor, able to invert the rotation direction when the rotating body (20) encounters a resistance of an intensity of a small amount lower than a resistance which would provoke a significant deformation of or a damage to the capsule.

6. The dispensing apparatus of capsules of claim 1, **characterised in that** it comprises a slide (40), located below the store (10) able to accompany, in a downwards direction, the capsules exiting from the store (10) through the outlet opening (15), and to predispose them in a final position (41), from which they are manually collected.

## Patentansprüche

1. Ausgabevorrichtung für Kapseln zur Herstellung von Getränken, wobei jede der Kapseln einen Körper (B1), der im Wesentlichen zylindrisch oder kegelstumpfförmig ist, und einen kreisförmigen Rand (B2) aufweist, der radial von dem Körper (B1) hervorsteht und der einen maximalen Durchmesser (B3) der Kapsel definiert,
umfassend einen Speicher (10), der eine Kammer (11) definiert, welche in der Lage ist, eine Vielzahl von lose angeordneten Kapseln zu enthalten, wobei die Kammer (11), zumindest in einem unteren Teil davon, durch eine Seitenwand (12), die im Wesentlichen zylindrisch ist und eine vertikale Achse (A) aufweist, und durch einen geschlossenen unteren horizontalen Boden (13) begrenzt ist,
umfassend einen rotierenden Körper (20), der koaxial zu der Kammer (11) ist, und der auf dem unteren Boden (13) liegt, wobei er eine im Wesentlichen zylindrische Seitenwand (21) aufweist, wobei:
ein leerer Korridor (22) zwischen der Seitenwand (12) der Kammer (11) und der Seitenwand (21) des rotierenden Körpers (20) abgegrenzt ist, wobei der leere Korridor (22) eine Verlängerung in Form eines geschlossenen Rings aufweist, die ein Ende des unteren Teils der Kammer (11) einnimmt, wobei der Querschnitt gemäß der allgemeinen axialen Ebene konstant ist und eine radiale Abmessung aufweist, die kleiner als der Durchmesser (B3) des kreisförmigen Rands (B2) einer Ausgabekapsel ist und eine Höhe aufweist, die größer als der Durchmesser (B3) ist, **dadurch gekennzeichnet, dass** die Ausgabevorrichtung ferner Folgendes umfasst: mehrere radial vorstehende erste Stangen (31), die an der Seitenwand des rotierenden Körpers (20) in einem Abstand von dem unteren Boden (13) befestigt sind, der kleiner als der Durchmesser (B3) des kreisförmigen Randes (B2) der Ausgabekapsel ist, wobei die ersten Stangen (31) zum Schieben einer in dem ringförmigen Korridor (22) angeordneten Kapsel geeignet sind,
mindestens eine zweite Stange (32), die an der oberen Abdeckung (23) des rotierenden Körpers (20) angeordnet ist, wobei die zweite Stange (32) zum Rütteln der Kapseln geeignet ist, die sich in dem Teil der Kammer (11) befinden, der den ringförmigen Korridor (22) überlagert,
eine Auslassöffnung (15), die in einem Punkt des ringförmigen Korridors (22) in dessen unterem Boden (13) angeordnet ist, die eine solche Form und Abmessungen hat, dass der Durchgang jeweils einer Kapsel ermöglicht wird, sofern die Kapsel so angeordnet ist, dass sie mit der Achse (B4) des Körpers (B1) im Wesentlichen horizontal und radial oder nahezu radial ausgerichtet ist.

2. Ausgabevorrichtung gemäß Anspruch 1, wobei mindestens eine dritte Stange (33) an der Seitenwand (12) der Kammer befestigt ist, wobei die mindestens eine dritte Stange (33) radial in Richtung der vertikalen Achse (A) der Kammer vorsteht, wobei ein freies Ende der mindestens einen dritten Stange (33) relativ nahe an der Oberfläche der oberen Abdeckung (23) des rotierenden Körpers (20) gelegen ist.

3. Ausgabevorrichtung für Kapseln gemäß Anspruch 1, wobei mindestens eine vierte Stange (34) an der Seitenwand (12) der Kammer befestigt ist, wobei die mindestens eine vierte Stange (34) radial in Richtung der vertikalen Achse A der Kammer vorsteht und vertikal über der Auslassöffnung (15) in einem Abstand von dem unteren Boden (13) angeordnet ist, der etwas größer als der Durchmesser (B3) des kreisförmigen Randes (B2) ist.

4. Ausgabevorrichtung gemäß Anspruch 2 und 3, **dadurch gekennzeichnet, dass** die zweiten Stangen (32) und/oder die dritten Stangen (33) und/oder die vierten Stangen (34) bis zu einem Punkt elastisch biegsam sind, an dem sie sich nur unter einer Schubkraft biegen, deren Intensität geringfügig niedriger ist als eine Schubkraft, die eine erhebliche Verformung der Kapsel verursachen würde.

5. Ausgabevorrichtung für Kapseln gemäß Anspruch 1, aufweisend einen Motor (37), der eine Rotation in einer Richtung oder in einer entgegengesetzten Richtung des rotierenden Körpers (20) erzeugt, **dadurch gekennzeichnet, dass** sie eine mit dem Motor verbundene Steuervorrichtung umfasst, die dazu in der Lage ist, die Rotationsrichtung umzukehren, wenn der rotierende Körper (20) auf einen Widerstand mit einer Intensität trifft, die geringfügig niedriger ist als ein Widerstand, der eine erhebliche Verformung oder eine Beschädigung der Kapsel hervorrufen würde.

6. Ausgabevorrichtung für Kapseln gemäß Anspruch 1, **dadurch gekennzeichnet, dass** sie einen Schieber (40) umfasst, der sich unter dem Speicher (10) befindet und in der Lage ist, die aus dem Speicher (10) durch die Auslassöffnung (15) herauskommenden Kapseln nach unten zu begleiten und sie in eine Endposition (41) zu verbringen, aus der sie manuell entnommen werden.

## Revendications

1. Appareil de distribution de capsules pour la production de boissons, dans lequel chacune des capsules a un corps (B1) qui est sensiblement cylindrique ou tronconique et un bord circulaire (B2) faisant saillie de façon radiale du corps (B1) et qui définit un diamètre maximal (B3) de la capsule,
comprenant un stock (10) qui définit une chambre (11), capable de contenir une pluralité de capsules disposées de façon libre, chambre (11) qui, au moins dans sa partie inférieure, est délimitée par une paroi latérale (12), laquelle est sensiblement cylindrique et a un axe vertical (A), et par une base horizontale inférieure fermée (13),
comprenant un corps pivotant (20), coaxial à la chambre (11), située dans la base inférieure (13), ayant une paroi latérale sensiblement cylindrique (21), dans lequel :
un couloir vide (22) est délimité entre la paroi latérale (12) de la chambre (11) et la paroi latérale (21) du corps pivotant (20), couloir vide (22) qui a une extension annulaire fermée, qui occupe une extrémité de la partie inférieure de la chambre (11), dont la section, selon le plan axial général, est constante et a une dimension radiale qui est plus petite que le diamètre (B3) du bord circulaire (B2) d'une capsule de distribution et a une hauteur plus grande que le diamètre (B3), **caractérisé en ce que** l'appareil de distribution comprend en outre quelques premières barres faisant saillie de façon radiale (31) fixées à la paroi latérale du corps pivotant (20), à une distance de la base inférieure (13) qui est plus petite que le diamètre (B3) du bord circulaire (B2) de la capsule de distribution, premières barres (31) qui sont aptes à pousser une capsule située dans le couloir annulaire (22),
au moins une deuxième barre (32) située dans le couvercle supérieur (23) du corps pivotant (20), deuxième barre (32) qui est apte à secouer légèrement les capsules situées dans la partie de la chambre (11) superposée sur le couloir annulaire (22),
une ouverture de sortie (15) située dans un point du couloir annulaire (22), dans sa base inférieure (13), ayant une forme et dimensions de sorte à permettre le passage d'une capsule à la fois, seulement si la capsule est disposée avec l'axe (B4) du corps (B1) sensiblement horizontale et orientée de façon radiale ou de façon quasi radiale.

2. Appareil de distribution selon la revendication 1, dans lequel au moins une troisième barre (33) est fixée à la paroi latérale (12) de la chambre, au moins une troisième barre (33) qui fait saillie de façon radiale vers l'axe vertical (A) de la chambre, au moins une troisième barre (33) dont une extrémité libre est relativement proche à la surface du couvercle supérieur (23) du corps pivotant (20).

3. Appareil de distribution de capsules selon la revendication 1, dans lequel au moins une quatrième barre (34) est fixée à la paroi latérale (12) de la chambre, au moins une quatrième barre (34) qui fait saillie de façon radiale vers l'axe vertical A de la chambre, et est située de façon verticale au-dessus de l'ouverture de sortie (15), a une distance de la base inférieure (13) qui est légèrement plus grande que le diamètre (B3) du bord circulaire (B2).

4. Appareil de distribution selon la revendication 2 et 3, **caractérisé en ce que** les deuxièmes barres (32) et/ou les troisièmes barres (33) et/ou les quatrièmes barres (34) sont élastiquement flexibles jusqu'à un point de flexion seulement sous la poussée d'une intensité d'une petite quantité inférieure à une poussée qui causerait une déformation significative de la capsule.

5. Appareil de distribution de capsules selon la revendication 1, ayant un moteur (37) qui engendre une rotation dans un sens ou dans un sens opposé du corps pivotant (20), **caractérisé en ce qu'**il comprend un dispositif de commande relié au moteur, capable d'invertir le sens de rotation lorsque le corps pivotant (20) rencontre une résistance d'une intensité d'une petite quantité inférieure à une résistance qui provoquerait une déformation significative ou des dommages à la capsule.

6. Appareil de distribution de capsules selon la revendication 1, **caractérisé en ce qu'**il comprend une glissière (40), située en dessous du stock (10) capable d'accompagner, dans une direction vers le bas, les capsules en sortie du stock (10) à travers l'ouverture de sortie (15), et de les prédisposer dans une position finale (41), d'où elles sont manuellement collectées.
